# FASCICULE DE BREVET EUROPEEN

(11) **EP 0 840 489 B1**
(45) Date de publication et mention de la délivrance du brevet: **19.05.2004**
(21) Numéro de dépôt: 97402521.5
(22) Date de dépôt: 24.10.1997
(51) Int. Cl.: H04M 3/42, H04M 3/48, H04M 1/57, H04Q 11/04, H04Q 3/00

(54) **Compatibilité entre un service téléphonique avec serveur et un service RNIS d'identification de demandeur**
Kompatibilität zwischen einem Fernsprechdienst mit Anbieter und einem ISDN Anruferidentifikationsdienst
Compatibility between a telephone service with server and an ISDN caller identification service

(30) Priorité: 30.10.1996 FR 9613387
(43) Date de publication de la demande: 06.05.1998
(73) Titulaire: FRANCE TELECOM SA, 75015 Paris (FR)
(72) Inventeur: Rouge, Thierry, 22560 Pleumeur Bodou (FR); Chemin, François, 22300 Lannion (FR)
(74) Mandataire: Cabinet Martinet & Lapoux

(56) Documents cités:
- EP-A- 0 588 571
- EP-A- 0 609 016
- US-A- 5 163 087

## Description

La présente invention concerne, de manière générale, les services mis à disposition d'usagers d'un réseau téléphonique par un serveur raccordé audit réseau téléphonique.

Selon la demande de brevet français n° 9609355 déposée le 23 juillet 1996 par l'un des inventeurs, CHEMIN François, et non encore publiée, des services téléphoniques sont fournis par un serveur externe aux commutateurs du réseau téléphonique et relié au réseau par l'intermédiaire d'interfaces RNIS (Réseau Numérique à Intégration de Services). Des services connus, tels que les renvois d'appels, l'identification du demandeur, le filtrage d'appel, le rappel du dernier demandeur, etc., déjà proposés aux usagers numériques et, pour certains services, aux usagers analogiques grâce au réseau RNIS, peuvent être mis en oeuvre autrement en effectuant des renvois d'appels vers un serveur capable d'abouter des communications entre des terminaux d'usager. Avantageusement, un tel procédé, comme celui décrit dans la demande de brevet précitée, est aisément applicable à tous types de terminal d'usager, numérique ou analogique.

La demande de brevet EP-A-0609016 concerne un service d'acceptation sélectif d'appel selon lequel une liste de numéros téléphoniques de demandeurs sélectionnés par un demandé est préalablement mémorisée dans un serveur de service. En réponse à une demande d'établissement de communication d'un terminal demandeur appelant le terminal demandé, le serveur présente l'appel au terminal demandé avec le numéro du demandeur si le numéro du demandeur est inclus dans la liste associée au numéro du demandé. Si le demandé décide d'accepter l'appel, la communication initiale du demandeur est aboutée à la communication entre le serveur et le terminal demandé.

La demande de brevet EP-A-0588571 concerne un transfert d'un appel entrant vers un terminal demandé depuis un terminal demandeur, au moyen d'un terminal intermédiaire de transfert d'appel entrant. En réponse à un message d'établissement d'appel transmis par le terminal demandeur, le terminal de transfert remplace le numéro du terminal demandeur par le numéro du terminal de transfert, en tant que numéro de source, et le numéro du terminal de transfert par le numéro du terminal demandé, en tant que numéro de destinataire, pour constituer un nouveau message d'établissement d'appel transmis par le terminal de transfert au terminal demandé. Le terminal de transfert ajoute le numéro du demandeur en tant que sous-adresse dans le message d'établissement transmis au terminal demandé. Plus particulièrement, la présente invention concerne l'utilisation par un même usager d'un service utilisant un serveur externe au réseau et du service complémentaire du RNIS d'identification de demandeur, dit "service CLIP" (Calling Line Identification Presentation), mis en oeuvre au moyen d'une signalisation de type CCITT n°7.

La technique antérieure ne fournit pas de procédé visant à offrir simultanément à un usager par exemple le service de "Rappel du Dernier Appelant", employant un serveur externe aux commutateurs du réseau téléphonique et effectuant des aboutements de communications, et le service "CLIP". En effet, lorsqu'un terminal d'usager demandeur établit une communication avec un terminal d'usager demandé possédant un écran et abonné au service "CLIP", par l'intermédiaire d'un serveur, c'est-à-dire par aboutement au niveau du serveur d'une communication entre le terminal demandeur et le serveur à une communication entre le serveur et le terminal demandé, le numéro affiché sur l'écran du terminal demandé est celui du serveur et non pas celui du terminal demandeur.

La présente invention vise à remédier à l'inconvénient précité en fournissant un procédé capable de rendre compatible le service de "Rappel du Dernier Appelant" et le service "CLIP", d'une manière simple, pratique et transparente pour l'usager.

A cette fin, un procédé pour rendre compatible dans un réseau téléphonique un service téléphonique utilisant un serveur relié audit réseau téléphonique avec un service d'identification de demandeur, le serveur aboutant une première communication entre un terminal d'usager demandeur et lui-même à une seconde communication entre lui-même et un terminal d'usager demandé, l'usager dudit terminal demandé ayant préalablement souscrit audit service d'identification de demandeur, est caractérisé en ce qu'il comprend les étapes successives suivantes :
- transmettre le numéro téléphonique du terminal demandeur dans la demande d'établissement de ladite première communication depuis le réseau téléphonique vers le serveur qui succède à une communication depuis le terminal demandé vers le serveur au cours de laquelle le serveur a mémorisé le numéro téléphonique du terminal demandé, en tant que terminal ayant dernièrement appelé le terminal demandeur,
- remplacer le numéro téléphonique du serveur dans une demande d'établissement de ladite deuxième communication par ledit numéro téléphonique mémorisé du terminal demandeur (TA) en réponse à la demande d'établissement de ladite première communication dans le serveur, et
- transmettre la demande d'établissement de ladite seconde communication avec ledit numéro téléphonique du terminal demandeur depuis le serveur vers le réseau téléphonique afin que ledit numéro téléphonique du terminal demandeur soit transmis depuis le réseau téléphonique au terminal demandé.

La transmission dudit numéro téléphonique au terminal demandé est conforme au service d'identification de demandeur.

Typiquement, le numéro téléphonique du terminal demandeur est transmis depuis le serveur vers le réseau téléphonique en tant que Numéro de Désignation Supplémentaire du serveur. Ce type de numéro n'est en effet pas vérifié par le réseau téléphonique si bien que le service d'identification de demandeur le fournit au terminal demandé depuis le réseau téléphonique comme si c'était le numéro du serveur.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un système téléphonique de mise à disposition de services utilisant un serveur externe au réseau téléphonique, et
- la figure 2 est un algorithme du procédé conforme à la présente invention.

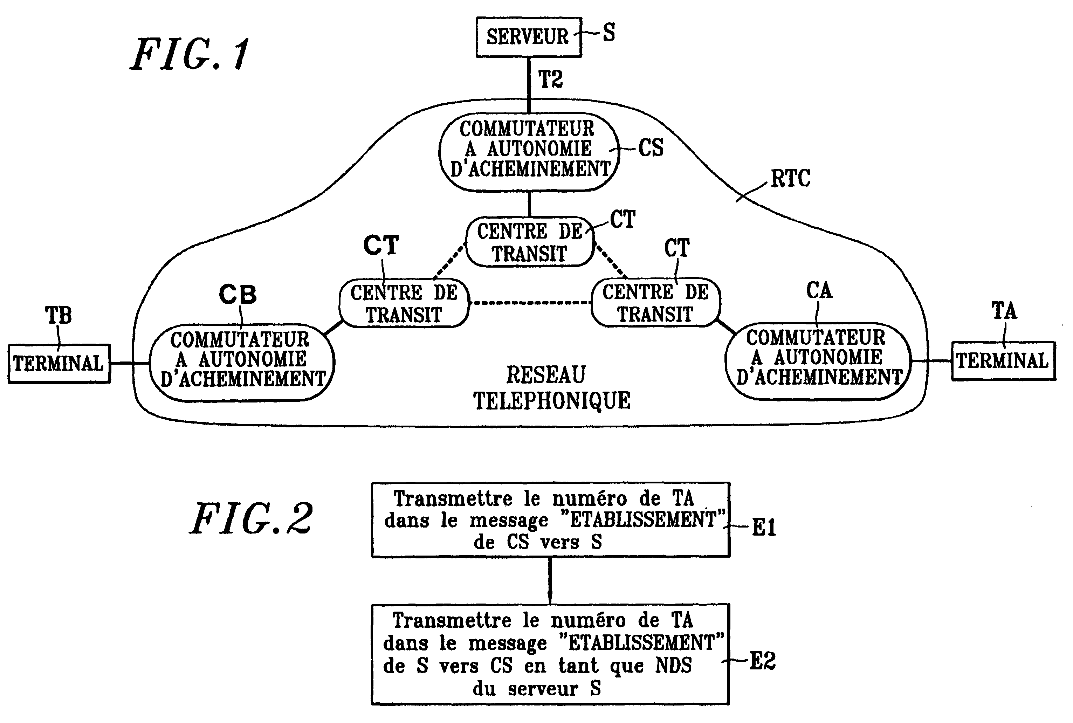

En référence à la figure 1, un terminal d'usager demandeur TA, un terminal d'usager demandé TB et un serveur S sont reliés à un réseau téléphonique commuté RTC. Le réseau téléphonique commuté RTC comprend classiquement des commutateurs à autonomie d'acheminement (CAA) CA, CB et CS auxquels sont rattachés respectivement les terminaux d'usager TA et TB et le serveur S à travers éventuellement des commutateurs locaux (non représentés). Le réseau RTC inclut en outre des centres de transit CT à travers lesquels les différents commutateurs à autonomie d'acheminement (CAA), dits également commutateurs de rattachement d'usagers, sont reliés entre eux. Le serveur S est par exemple un ordinateur PC (Personal Computer) ou une station de travail, et est équipé d'une ou plusieurs interfaces RNIS (Réseau Numérique à Intégration de Services) de type S2. La liaison entre le serveur S et son commutateur de rattachement CS est réalisée en accès primaire par l'intermédiaire d'une interface RNIS classique de type T2 à 2048 kbit/s fournissant 30 canaux B d'information et 1 canal D de signalisation à 64 kbit/s chacun. Les terminaux d'usager TA et TB sont par exemple des postes téléphoniques desservis par une ligne analogique ou numérique.

Le serveur S met à disposition de certains terminaux d'usagers, tels que le terminal TA dans le cas illustré à la figure 1, des services particuliers. Ces services particuliers sont décrits dans la demande de brevet français précitée n° 9609355. Ci-après, les échanges d'information entre le serveur S et les terminaux d'usager TA et TB sont expliqués dans le cadre du service "Rappel du Dernier Appelant" à titre d'exemple seulement.

Selon ce service, le serveur S conserve dans une mémoire les numéros téléphoniques des derniers terminaux d'usager ayant demandé à établir une communication avec le terminal TA. Cette mémorisation de numéros résulte du renvoi de tous les appels à destination du terminal TA vers le serveur S dans le commutateur de rattachement CA du terminal TA, comme décrit dans la demande de brevet précitée n° 9609355. En variante, les appels destinés au terminal TA sont renvoyés vers le serveur S par le commutateur CA lorsque les terminaux appelants n'ont pas reçu de réponse du terminal TA à l'expiration d'une temporisation prédéterminée.

Le terminal TA peut ensuite à tout moment établir une communication avec le serveur S afin de consulter la liste des numéros de terminaux d'usager, tels que le terminal TB, l'ayant dernièrement appelé, et demander au serveur S d'établir une communication avec le terminal TB. La communication entre le terminal TA et le serveur peut être réalisée par dialogue guidé par signaux à fréquences vocales, le serveur disposant d'une interface vocale et l'usager du terminal TA répondant à des messages vocaux émis par le serveur par l'actionnement de touches du clavier du terminal déclenchant la génération de signaux en code DTMF (Dual-Tone Multifrequency). Après établissement de la connexion du serveur S avec le terminal TB, le serveur S aboute alors la communication entre le terminal demandeur TA et le serveur à la communication entre le serveur et le terminal demandé TB.

Les échanges entre le terminal demandeur TA, le serveur S et le terminal demandé TB sont maintenant décrits plus en détail. Les messages de signalisation cités ci-après sont définis dans la recommandation Q.931, Fascicule VI.11 du CCITT.

Le serveur S reçoit selon le protocole D un premier message de signalisation "ETABLISSEMENT" fourni par le commutateur de rattachement CS, l'informant que le terminal demandeur TA demande à établir une communication avec lui. Le serveur S transmet ensuite successivement au commutateur de rattachement CS un message "ALERTE", afin que le commutateur CS transmette un message de retour d'appel au commutateur de rattachement CA du terminal TA, et un message "CONNEXION" de manière à établir la communication avec le terminal TA.

Afin d'établir une communication avec le terminal demandé TB, le serveur transmet un message "ETABLISSEMENT" au commutateur CS, puis attend de recevoir des messages successifs "ALERTE" et "CONNEXION" selon le protocole D. Une fois le message "CONNEXION" reçu de son commutateur de rattachement CS, constituant le début d'une communication avec le terminal TB, le serveur S aboute la communication entre le terminal TA et le serveur S à celle entre le serveur S et le terminal TB, au moyen d'une carte RNIS.

Toutefois, pour certains services fournis par le serveur S, les deux établissements de communication ci-dessus sont effectués de manière imbriquée. Le serveur S attend de recevoir le message "CONNEXION" pour la communication avec le terminal demandé TB avant de renvoyer le message "CONNEXION" pour la communication avec le terminal demandeur TA.

Selon l'invention, l'usager du terminal TB a préalablement souscrit au service complémentaire du RNIS d'identification de demandeur, dit également "service CLIP" (Calling Line Identification Presentation). A cet effet, le terminal TB possède un écran. A chaque demande d'établissement de communication provenant d'un terminal d'usager demandeur, le numéro du terminal demandeur est affiché sur l'écran du terminal TB. Ce numéro est fourni au terminal TB de manière connue par le commutateur de rattachement CB qui le reçoit, dans le réseau RTC, du commutateur de rattachement du terminal demandeur selon une signalisation de type CCITT n°7.

En référence à la figure 2, au cours d'une première étape E1 du procédé conforme à l'invention, lors de la réception du message "ETABLISSEMENT" relatif à la demande d'établissement de communication émise par le terminal TA vers le serveur, le serveur S récupère le numéro téléphonique du terminal TA dans un élément d'information intitulé "Numéro d'origine" contenu dans le message "ETABLISSEMENT" ci-dessus. Cet élément d'information est défini dans la spécification CSE P22-30A, Edition 2, publiée par la Direction Générale des Postes et des Télécommunications (DGPT) en août 1994, et correspond à l'élément d'information "Numéro de l'usager demandeur" cité dans la recommandation précitée Q.931 du CCITT. Ledit numéro téléphonique du terminal TA récupéré par le serveur S est en pratique le Numéro de Désignation de l'Installation (NDI) du terminal TA qui est engendré par le réseau RTC. Toutefois, si le terminal demandeur TA est abonné au RNIS et s'il a engendré son Numéro de Désignation Supplémentaire (NDS) lors de la demande d'établissement de communication vers le serveur S, alors le NDS et le NDI du terminal TA sont tous deux inclus dans le message "ETABLISSEMENT" reçu par le serveur S, et le serveur S ne récupère que le numéro NDS.

Selon une seconde étape E2 du procédé conforme à la présente invention, le serveur S introduit le numéro du terminal TA (NDS ou NDI), tel qu'il l'a récupéré au cours de la première étape E1, en tant que Numéro de Désignation Supplémentaire (NDS) du serveur, c'est-à-dire comme si c'était le NDS du serveur, dans un élément d'information "Numéro d'origine" contenu dans le message de signalisation "ETABLISSEMENT" à transmettre au commutateur de rattachement CS pour informer le réseau RTC de la demande d'établissement de communication du serveur S vers le terminal TB. Comme précisé dans la spécification précitée CSE P22-30A, le réseau téléphonique ne vérifie pas si le Numéro de Désignation Supplémentaire (NDS) reçu correspond bien à celui du demandeur, à savoir le serveur S. Le NDS étant connu par le réseau RTC, ce numéro, et non le NDI, est présenté au terminal demandé TB par le service CLIP. Le terminal TB reçoit et affiche ainsi sur son écran non pas le numéro du serveur S mais celui du terminal demandeur TA l'ayant appelé par l'intermédiaire du serveur S.

## Revendications

1. Procédé pour rendre compatible dans un réseau téléphonique (RTC) un service téléphonique utilisant un serveur (S) relié audit réseau téléphonique (RTC) avec un service d'identification de demandeur, le serveur (S) aboutant une première communication entre un terminal d'usager demandeur (TA) et lui-même à une seconde communication entre lui-même et un terminal d'usager demandé (TB), l'usager dudit terminal demandé (TB) ayant préalablement souscrit audit service d'identification de demandeur, **caractérisé en ce qu'**il comprend les étapes successives suivantes :
- transmettre (E1) le numéro téléphonique du terminal demandeur (TA) dans la demande d'établissement de ladite première communication depuis le réseau téléphonique (RTC) vers le serveur (S) qui succède à une communication depuis le terminal demandé (TB) vers le serveur (S) au cours de laquelle le serveur a mémorisé le numéro téléphonique du terminal demandé, en tant que terminal ayant dernièrement appelé le terminal demandeur (TA),
- remplacer le numéro téléphonique du serveur dans une demande d'établissement de ladite deuxième communication par ledit numéro téléphonique mémorisé du terminal demandeur (TA) en réponse à la demande d'établissement de ladite première communication dans le serveur (S), et
- transmettre (E2) la demande d'établissement de ladite seconde communication avec ledit numéro téléphonique du terminal demandeur (TA) depuis le serveur (S) vers le réseau téléphonique (RTC) afin que ledit numéro téléphonique du terminal demandeur soit transmis depuis le réseau téléphonique (RTC) au terminal demandé (TB).

2. Procédé conforme à la revendication 1, selon lequel ledit numéro téléphonique du terminal demandeur (TA) est transmis depuis le serveur (S) vers le réseau téléphonique (RTC) en tant que Numéro de Désignation Supplémentaire (NDS) du serveur (S).

## Patentansprüche

1. Verfahren, um in einem Fernsprechnetz (RTC) einen einen mit dem Fernsprechnetz (RTC) verbundenen Server (S) benutzenden Fernsprechdienst mit einem Dienst zur Identifikation des Anrufers kompatibel zu machen, wobei der Server (S) eine erste Kommunikation zwischen einem Endgerät des anrufenden Benutzers (TA) und sich selbst an eine zweite Kommunikation zwischen sich selbst und einem Endgerät des angerufenen Benutzers (TB) anreiht, wobei der Benutzer des angerufenen Endgeräts (TB) vorher den Dienst zur Identifikation des Anrufers abonniert hat, **dadurch gekennzeichnet, daß** es die folgenden aufeinanderfolgenden Stufen umfaßt:
- Übertragen (E1) der Fernsprechnummer des anrufenden Endgeräts (TA) in der Anforderung zur Herstellung der ersten Kommunikation vom Fernsprechnetz (RTC) zum Server (S), der zu einer Kommunikation von dem angerufenen Endgerät (TB) zum Server (S) fortschreitet, in deren Verlauf der Server die Fernsprechnummer des angerufenen Endgeräts als das Endgerät, das das Endgerät des Anrufers (TA) zuletzt angerufen hat, gespeichert hat,
- Ersetzen der Fernsprechnummer des Servers in einer Anforderung zur Herstellung der zweiten Kommunikation mit der vom anrufenden Endgerät (TA) gespeicherten Fernsprechnummer als Reaktion auf die Anforderung zur Herstellung der ersten Kommunikation im Server (S), und
- Übertragen (E2) der Anforderung zur Herstellung der zweiten Kommunikation mit der Fernsprechnummer des anrufenden Endgeräts (TA) vom Server (S) zum Fernsprechnetz (RTC), um die Fernsprechnummer des anrufenden Endgeräts vom Fernsprechnetz (RTC) zum angerufenen Endgerät (TB) zu übertragen.

2. Verfahren nach Anspruch 1, wonach die Fernsprechnummer des anrufenden Endgeräts (TA) vom Server (S) zum Fernsprechnetz (RTC) als Zusatzbezeichnungsnummer (NDS - Numéro de Désignation Supplémentaire) des Servers (S) übertragen wird.

## Claims

1. A method of making compatible within a telephone network (RTC) a telephone service using a server (S) connected to said telephone network (RTC) and a calling line identification presentation service, the server (S) joining a first call between a calling user terminal (TA) and said server to a second call between said server and a called user terminal (TB), the user of said called terminal (TB) having previously subscribed to said calling line identification presentation service, **characterized in that** it comprises the following successive steps :
- transmitting (E1) the telephone number of the calling terminal (TA) in the request to set up said first call from the telephone network (RTC) to the server (S) which succeeds a call from the called terminal (TB) to the server (S) during which the server has stored in memory the telephone number of the called terminal, as the terminal that most recently called the calling terminal (TA),
- replacing a telephone number of the server in a request to set up said second call with said stored telephone number of the calling terminal (TA) in response to the request to set up said first call in the server (S), and
- transmitting (E2) the request to set up said second call with said telephone number of the calling terminal (TA) from the server (S) to the telephone network (RTC) so that said telephone number of the calling terminal is transmitted from the telephone network (RTC) to the called terminal (TB).

2. A method according to claim 1, wherein said telephone number of the calling terminal (TA) is transmitted from the server (S) to the telephone network (RTC) as a Supplementary Identification Number (NDS) of the server (S).
